# EUROPÄISCHE PATENTSCHRIFT

(11) **EP 3 156 026 B1**
(45) Veröffentlichungstag und Bekanntmachung des Hinweises auf die Patenterteilung: **02.12.2020**
(21) Anmeldenummer: 16002192.9
(22) Anmeldetag: 12.10.2016
(51) Int. Cl.: A61G 3/06, B60P 1/43

(54) **VORRICHTUNG ZUM ERLEICHTERN DES EIN- UND AUSSTIEGS VON INSBESONDERE ROLLSTUHLFAHRERN IN EIN BZW. AUS EINEM FAHRZEUG**
DEVICE FOR FACILITATING ENTRY AND EXIT TO AND FROM A VEHICLE, ESPECIALLY WHEELCHAIR USERS
DISPOSITIF DESTINÉ À FACILITER LA MONTÉE ET LA DESCENTE EN PARTICULIER DE CONDUCTEURS EN FAUTEUIL ROULANT D'UN VÉHICULE AUTOMOBILE

(30) Priorität: 14.10.2015 DE 102015013235
(43) Veröffentlichungstag der Anmeldung: 19.04.2017
(60) Teilanmeldung: 17000805.6
(73) Patentinhaber: Palfinger Tail Lifts GmbH, 27777 Ganderkesee (DE)
(72) Erfinder: Altmann, Serge, 27753 Delmenhorst (DE); Wiels, Bernhard, 26135 Oldenburg (DE)
(74) Vertreter: Möller, Friedrich

(56) Entgegenhaltungen:
- EP-A2- 1 121 920
- EP-A2- 1 787 612
- WO-A1-98/06370
- DE-A1- 10 043 561
- DE-A1- 10 065 989
- DE-U1- 20 209 257
- DE-U1-202006 008 079
- US-A- 4 685 858
- US-A1- 2007 200 313

## Beschreibung

Die Erfindung betrifft eine als Ein- und Ausstiegshilfe für insbesondere Rollstuhlfahrer dienende Vorrichtung gemäß dem Oberbegriff des Anspruchs 1.

Vorrichtungen der hier angesprochen Art kommen zum Einsatz, um mobilitätsbehinderten Personen die Benutzung von freien öffentlichen Verkehrsmitteln wie Zügen, Bussen, Straßenbahnen oder dergleichen zu ermöglichen bzw. zu erleichtern. Dazu ist im Türbereich des Fahrzeugs eine ein- und ausfahrbare Rampe angeordnet. In einer Nichtgebrauchsstellung ist die Rampe in ein Gehäuse unter einer Flurfläche im Bereich der Tür des Fahrzeugs eingefahren. In einer Gebrauchsstellung ist die Rampe aus dem Gehäuse herausgefahren und gegebenenfalls verschwenkt zur Bildung einer geneigten Fläche, die einen Höhenunterschied zwischen der Flurfläche des Fahrzeugs und einem angrenzenden Bahnsteig, Gehweg oder einem sonstigen Untergrund überbrückt.

Bei ausgefahrener und verschwenkter Rampe muss die zum Fahrzeug weisende Querkante derselben einen im Wesentlichen absatzlosen Übergang zur ihr zugewandten Kante der Flurfläche im Bereich der Tür des Fahrzeugs bilden. Im Fachjargon wird hierbei von einer Flurkantenanpassung gesprochen. Dazu sind die aus der DE 202 09 257 U1 und aus der US 4 685 858 A bekannten Vorrichtungen mit einem Hebeltrieb versehen, an dem die fahrzeugseitige Querkante der Rampe angelenkt ist.

Aus der DE 100 65 989 A1 ist eine gattungsgemäße Vorrichtung bekannt, bei der zur Flurkantenanpassung ein Schieber und ein Schlitten vorgesehen sind. Die Aufrichthebel zur Herbeiführung der Flurkantenanpassung sind durch mit dem Schlitten verbundene Hubhebel verschwenkbar. Durch die Hubhebel werden die Hebeltriebe zur Herbeiführung der Flurkantenanpassung aufwendiger und auch störanfälliger.

Hiervon ausgehend liegt der Erfindung die Aufgabe zugrunde, eine Vorrichtung zur Erleichterung des Ein- und Ausstiegs von insbesondere Rollstuhlfahrern in ein bzw. aus einem Fahrzeug zu schaffen, die mit einfachen Mitteln eine zuverlässige Flurkantenanpassung ermöglicht.

Eine Vorrichtung zur Lösung der genannten Aufgabe weist die Merkmale des Anspruchs 1 auf. Dadurch, dass der Aufrichthebel des oder jedes Hebeltriebs an einem im Gehäuse verfahrbaren Schlitten gelagert ist und einen relativ zum Schlitten bewegbaren Schieber zum Verschwenken des jeweiligen Aufrichthebels aufweist, sind nur einfach aufgebaute Hebeltriebe erforderlich und es erübrigt sich ein separater Antrieb zum Verschwenken des jeweiligen Aufrichthebels. Dadurch kann auf einfache und zuverlässige Weise die Flurkantenanpassung realisiert werden.

Weiterhin ist jedem Schlitten ein doppelarmiger Kipphebel zugeordnet. Der jeweilige Kipphebel ist schwenkbar bzw. drehbar am jeweiligen Schlitten gelagert, und zwar vorzugsweise mit einem Ende eines ersten (oberen) Hebelarms. Durch den jeweiligen Kipphebel kann die Relativbewegung des Schiebers zum jeweiligen Schlitten umgesetzt werden in eine zur Herbeiführung der Flurkantenanpassung erfolgende Schwenk- bzw. Kippbewegung des jeweiligen Aufrichthebels.

Der doppelarmige Kipphebel ist mit dem Aufrichthebel über mindestens einen Koppelarm verbunden. Der Koppelarm ist an einem zum Kipphebel weisenden Ende mit demselben gelenkig verbunden, und zwar bevorzugt mit einer Lagerstelle zwischen den beiden Hebelarmen des Kipphebels. Ein gegenüberliegendes Ende des Koppelarms ist mit demjenigen Aufrichthebel gelenkig verbunden, dem der Kipphebel zugeordnet ist, um den Aufrichthebel zur Herbeiführung der Flurkantenanpassung der Rampe hochzuschwenken und zur Rückgängigmachung der Flurkantenanpassung zurückzuschwenken. Auch durch den mindestens einen Koppelarm werden Relativbewegungen der für seine gegenüberliegenden Enden vorgesehenen Lagerstellen am Aufrichthebel und am Kipphebel ausgeglichen, so dass zwängungsfrei arbeitende Hebeltriebe entstehen.

Gemäß einer bevorzugten Ausgestaltungsmöglichkeit der Vorrichtung ist es vorgesehen, die Relativbewegung des Schiebers zum Schlitten erst zuzulassen bzw. freizugeben, sobald der Schlitten seine Endposition für die Gebrauchsstellung der Rampe erreicht hat. Dadurch findet eine Zwangssteuerung der Flurkantenanpassung statt, indem erst dann, wenn die Rampe zumindest größtenteils, vorzugsweise ganz, aus dem Gehäuse ausgefahren ist, vom Hebeltrieb die fahrzeugseitige Querkante der Rampe angehoben wird zur Herbeiführung der Flurkantenanpassung, wonach die Rampe ihre Gebrauchsstellung eingenommen hat. Eine solchermaßen zwangsgeführte Folgesteuerung der Bewegungsabläufe zum Überführen der Vorrichtung in die Gebrauchsstellung der Rampe arbeitet sehr zuverlässig, was für Vorrichtungen der hier angesprochenen Art eine wichtige Voraussetzung ist.

Bevorzugt kann mindestens ein Antrieb zum Ausfahren der Rampe aus dem Gehäuse und zum Einfahren der Rampe in das Gehäuse auf den jeweiligen Schieber einwirken. Beim Ausfahren der Rampe bewegt der Schieber zunächst den Schlitten ohne eine Relativbewegung zwischen beiden mit, bis der Schlitten seine Endposition erreicht hat, die er in der Gebrauchsstellung der Rampe bzw. Vorrichtung einnimmt. Erst im Anschluss daran erfolgt die zur Flurkantenanpassung führende Relativbewegung des Schiebers gegenüber den Schlitten. Es ist dadurch nur ein auf den oder vorzugsweise alle Schieber einwirkender Antrieb erforderlich, der auch soweit wie nötig den oder jeden Schlitten mit der daran angelenkten Rampe aus dem Gehäuse ausfährt. Umgekehrt erfolgen das Rückgängigmachen der Flurkantenanpassung und das anschließende Einfahren der Rampe in das Gehäuse.

Bevorzugt ist es vorgesehen, ein Ende des zweiten Hebelarms des doppelarmigen Kipphebels mit dem ihm zugeordneten Schieber zu verbinden, wodurch bei der Relativbewegung des Schiebers zum Schlitten der an letzterem drehbar gelagerte doppelarmige Kipphebel um seine Lagerachse am Schlitten verschwenkbar ist. Vorzugsweise ist das Ende des zweiten Hebelarms des doppelarmigen Kipphebels nicht direkt mit dem ihm zugeordneten Schieber verbunden, sondern indirekt mittels mindestens eines Betätigungsarms zwischen dem Ende des zweiten Hebelarms des Kipphebels und dem Schieber. Der mindestens eine Betätigungsarm führt zum Verschwenken des Kipphebels und gleicht die Verlagerungen des doppelarmigen Hebelarms beim Verschwenken desselben aus.

Eine vorteilhafte Weiterbildungsmöglichkeit der Vorrichtung sieht es vor, dass bei in der Gebrauchsstellung der Rampe hochgeschwenktem Aufrichthebel jedes Hebeltriebs die vorzugsweise mittige Lagerstelle jedes Kipphebels oberhalb an der jeweiligen Lagerstelle des Endes des ersten Hebelarms des Kipphebels am dazugehörenden Schlitten liegt. Hierdurch kommt der jeweilige Kipphebel bei herbeigeführter Flurkantenanpassung und hochgeschwenktem Aufrichthebel in eine sogenannte Übertotpunktstellung, die bei Belastung der Rampe zu einer automatischen mechanischen Sperrung und Sicherung des jeweiligen Kipphebels in seiner der Flurkantenanpassung entsprechenden Stellung herbeiführt. Es wird so ein selbstständiges Herausschwenken des Aufrichthebels und des damit getrieblich verbundenen Kipphebels jedes Hebeltriebs und dadurch eine ungewollte Rückgängigmachung der Flurkantenanpassung durch eine Relativbewegung des Schiebers zum Schlitten unmöglich gemacht.

Ein bevorzugtes Ausführungsbeispiel der Erfindung wird nachfolgend anhand der Zeichnung näher erläutert. In dieser zeigen:
- Fig. 1: einen Längsschnitt durch die Vorrichtung in einer Nichtgebrauchsstellung,
- Fig. 2: einen Längsschnitt durch die Vorrichtung der Fig. 1 in einer Gebrauchsstellung,

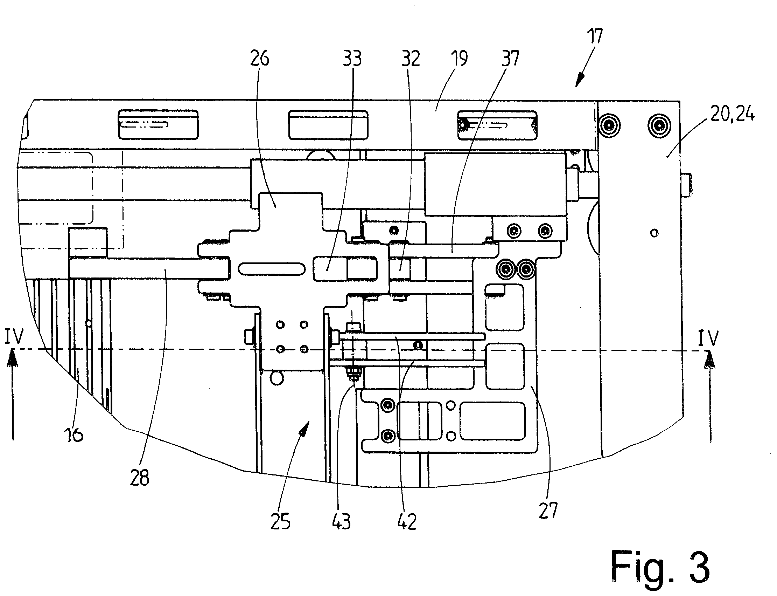

- Fig. 3: eine Draufsicht auf einen Hebeltrieb der Vorrichtung in ihrer Nichtgebrauchsstellung,
- Fig. 4: einen Längsschnitt IV-IV durch den Hebeltrieb der Fig. 3,

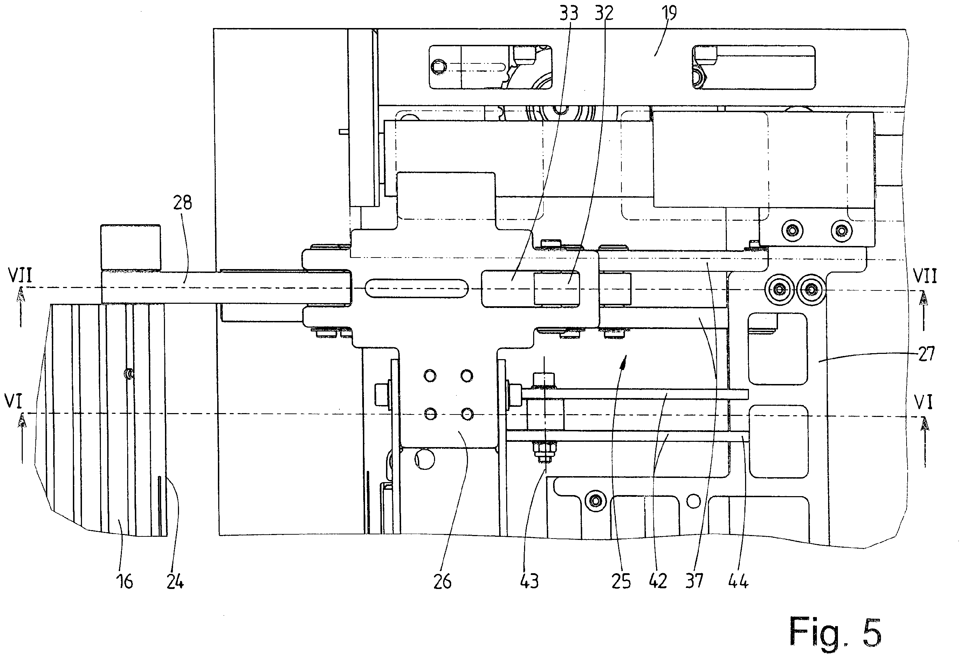

- Fig. 5: eine Draufsicht auf den Hebeltrieb der Fig. 3 kurz vor der Gebrauchsstellung der Vorrichtung,
- Fig. 6: einen Längsschnitt VI-VI durch den in der Fig. 5 dargestellten Hebeltrieb,

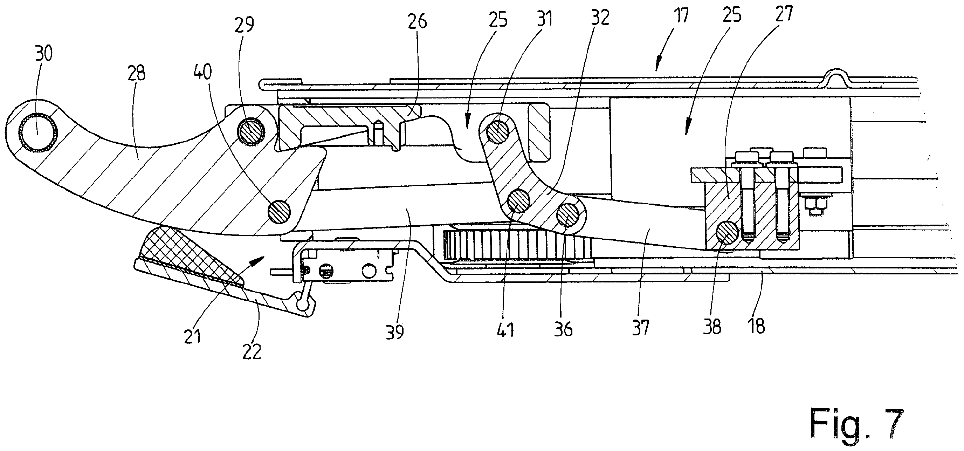

- Fig. 7: einen Längsschnitt VII-VII durch den in der Fig. 5 dargestellten Hebeltrieb,

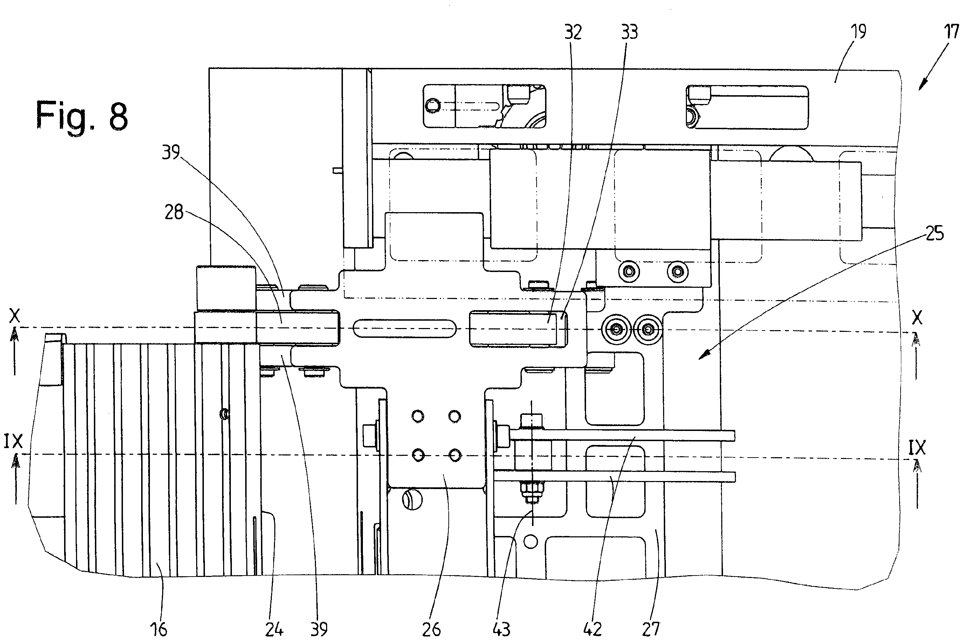

- Fig. 8: eine Draufsicht auf den Hebeltrieb in der Gebrauchsstellung der Vorrichtung,
- Fig. 9: einen Längsschnitt IX-IX durch den Hebeltrieb der Fig. 8, und
- Fig. 10: einen Längsschnitt X-X durch den Hebeltrieb der Fig. 8.

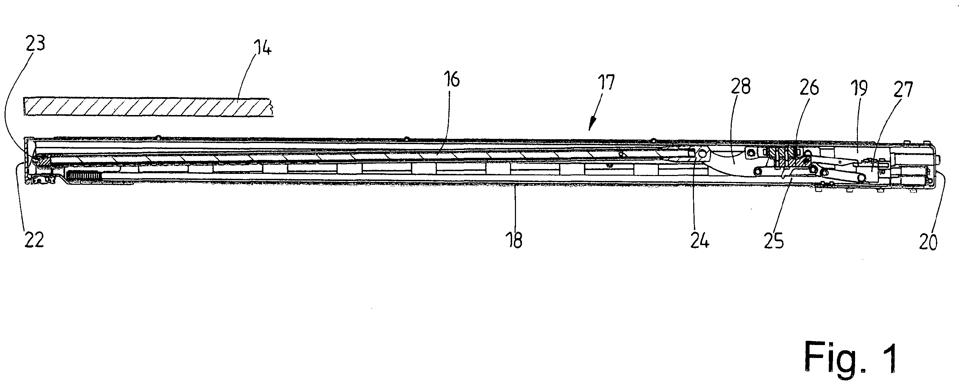

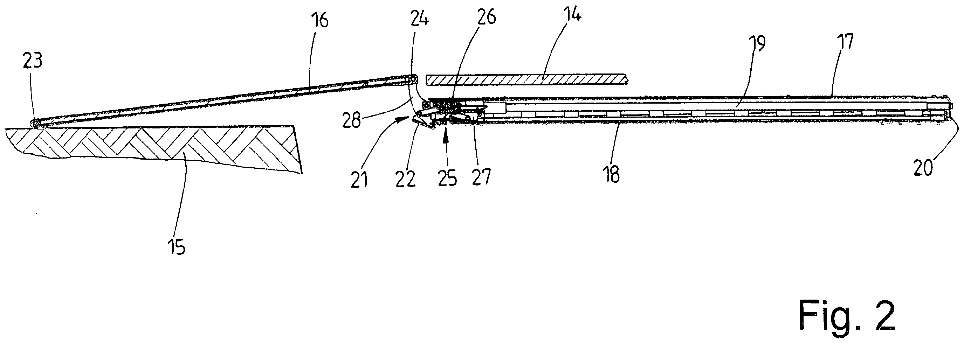

Die in den Figuren gezeigte Vorrichtung dient zur Erleichterung des Einstiegs und Ausstiegs von mobilitätsbehinderten Personen, beispielsweise Rollstuhlfahrer, in ein Fahrzeug bzw. aus einem Fahrzeug. Beim Fahrzeug handelt es sich insbesondere um ein öffentliches Verkehrsmittel, beispielsweise einen Bus, einen Zug, eine Straßenbahn oder dergleichen. Die Vorrichtung dient dabei zur Überwindung eines Höhenunterschieds zwischen einer nur in den Fig. 1 und 2 andeutungsweise dargestellten Flurfläche 14 des Fahrzeugs und einem nur in der Fig. 2 andeutungsweise dargestellten Bodenbelag 15, wie zum Beispiel einem Gehweg oder einem Bahnsteig einer Haltestelle des Fahrzeugs.

Die Vorrichtung verfügt über eine vorzugsweise rechteckige ebene Rampe 16, die aus einem fest mit dem Fahrzeug verbunden Gehäuse 17 in eine Gebrauchsstellung (Fig. 2) ausfahrbar bzw. in einen Nichtgebrauchsstellung (Fig. 1) einfahrbar ist. Das katenförmige Gehäuse 17 ist im Türbereich des Fahrzeugs unter der Flurfläche 14 desselben befestigt. Dabei kann sich das Gehäuse 17 mit einer Deckwandung unter der Flurfläche 14 befinden, wie es in der Fig. 1 dargestellt ist. Es ist aber auch denkbar, dass die Flurfläche 14 die Deckwandung des Gehäuses 17 bildet. Mit parallelem Abstand unter der Flurfläche 14 befindet sich eine ebene Bodenwandung 18 des Gehäuses 17. Zwischen der Deckwandung und der Bodenwandung 18 des Gehäuses 17 befinden sich parallele, aufrechte Längsseitenwandungen 19 und eine Rückwandung 20 des Gehäuses 17. Eine sich vorzugsweise unterhalb der Türebene des Fahrzeugs befindende Vorderseite des Gehäuses 17 verfügt über eine vollflächige Öffnung 21. Diese Öffnung 21 ist durch eine schwenkbare Klappe 22 in der Nichtgebrauchsstellung der Vorrichtung verschließbar (Fig. 1). Dabei liegt eine in der Gebrauchsstellung auf dem Bodenbelag 15 des Bahnsteigs oder dergleichen aufliegende vordere freie Querkante 23 der Rampe 16 verdeckt hinter der geschlossenen Klappe 22 im Gehäuse 17.

Einer der vorderen Querkante 23 gegenüberliegende, fahrzeugseitigen Querkante 24 der Rampe 16 sind im gezeigten Ausführungsbeispiel zwei parallele, randseitig angeordnete Hebeltriebe 25 zugeordnet. Bevorzugt sind die Hebeltriebe 25 gleich ausgebildet; nur in Bezug auf die Längsmittelachse der Rampe 16 Eckbereichen der fahrzeugseitigen Querkante 24 spiegelverkehrt zugeordnet. Die Hebeltriebe 25 werden zum Ausfahren der Rampe 16 in die Gebrauchsstellung und zum Einfahren in die Nichtgebrauchsstellung gleichermaßen und synchron parallel zur Längsmittelachse der Rampe 16 im Gehäuse 17 verfahren. Dazu kann jedem Hebeltrieb 25 ein eigener Antrieb zugeordnet sein, wobei die beiden separaten Antriebe dann synchronisiert sind oder es werden beide Hebeltriebe 25 von einem gemeinsamen Antrieb synchron zum Verfahren der Rampe 16 aus der Nichtgebrauchsstellung in die Gebrauchsstellung und umgekehrt im Gehäuse 17 verfahren.

In erfindungsgemäß besonderer Weise sind die gleichen Hebeltriebe 25 ausgebildet. Im Folgenden werden der Aufbau und die Funktion eines der gleichen Hebeltriebe 25 näher erläutert:
Jeder Hebeltrieb 25 verfügt über einen Schlitten 26 und einen Schieber 27. Der Schieber 27 ist mit einem geeigneten Antrieb zum linearen Verfahren des Hebeltriebs 25 in Längsrichtung im Gehäuse 17 versehen bzw. mit mindestens einem Antrieb verbunden oder hieran angekuppelt. Von so axial verfahrbaren Schiebern 27 wird der Schlitten 26 im Gehäuse 17 mitbewegt. Im gezeigten Ausführungsbeispiel schiebt der Schieber 27 den Schlitten 26 beim Ausfahren der Rampe 16 aus dem Gehäuse 17 vor sich her. Beim Einfahren der Rampe 16 zieht der Schieber 27 den Schlitten 26 hinter sich her.

Am zur Öffnung 21 des Gehäuses 17 weisenden Ende ist dem Schlitten 26 jedes Hebeltriebs 25 ein Aufrichthebel 28 zugeordnet. Ein zum Schlitten 26 weisendes Ende des Aufrichthebels 28 ist um eine horizontale Achse 29 schwenkbar am Schlitten 26 angelenkt und gelagert. Ein gegenüberliegendes Ende des Aufrichthebels 28 ist gelenkig mit einem außenliegenden Randbereich der fahrzeugseitigen Querkante 24 der Rampe 16 verbunden, und zwar auch durch eine horizontale Achse 30, die parallel zur Achse 29 und parallel zur Querkante 24 der Rampe 16 verläuft. Durch ein Verschwenken des Aufrichthebels 28 jedes Hebeltriebs 25 ist eine Flurkantenanpassung der Rampe 16 herbeiführbar, wodurch die fahrzeugseitige Querkante 24 der Rampe 16, die in der Nichtgebrauchsstellung im Gehäuse 17 unter der Flurfläche 14 liegt, hochgeschwenkt wird auf das Niveau der Flurfläche 14, wodurch ein nahezu absatzloser Übergang zwischen der oberen Nutzfläche der Rampe 16 zur Nutzseite der Flurfläche 14 des Fahrzeugs entsteht (Fig. 2).

Eine weitere Besonderheit der Erfindung besteht darin, dass zum Hochschwenken des jeweiligen Aufrichthebels 28 in die Gebrauchsstellung der Vorrichtung der Abstand des Schiebers 27 zum Schlitten 26 veränderbar ist. Im gezeigten Ausführungsbeispiel ist der jeweilige Hebeltrieb 25 so ausgebildet, um durch Verringerung des Abstands des Schiebers 27 zum Schlitten 26 den jeweiligen Aufrichthebel 28 in die Gebrauchsstellung der Vorrichtung bzw. Rampe 16 hochzuschwenken. Mit anderen Worten wird zum Hochschwenken des Aufrichthebels 28 der Abstand zwischen dem Schlitten 26 und dem Schieber 27 verringert, indem kurz vor Erreichen der Betriebsstellung der schon vollständig aus dem Gehäuse 17 herausgefahren Rampe 16 der Schieber 27 hinter dem Schlitten 26 dichter an den Schlitten 26 herangefahren wird. Die dabei erfolgende Relativbewegung des Schiebers 27 zum Schlitten 26 wird mechanisch umgesetzt in die Schwenkbewegung zum Hochschwenken des Aufrichthebels 28 um die horizontale, parallel zur Querkante 24 der Rampe 16 verlaufende Achse 29, an der der Aufrichthebel 28 in einer vertikalen Ebene verschwenkbar am Schlitten 26 gelagert ist. Das damit einhergehende Hochschwenken des an der Rampe 16 um die parallel zur Achse 29 verlaufende Achse 30 drehbart gelagerten freien Endes des jeweiligen Aufrichthebels 28 dient zur Herbeiführung der Flurkantenanpassung. In umgekehrter Weise erfolgt das Zurückschwenken des jeweiligen Aufrichthebels 28 vor dem Einfahren der Rampe 16 in das Gehäuse 17. Dabei wird zunächst nur der Schieber 27 allein in Einfahrrichtung zur Rückwandung 20 des Gehäuses 17 verfahren, wobei der Schlitten 26 noch stehen bleibt. Es vergrößert sich folglich nur der Abstand des Schiebers 27 zum Schlitten 26, wobei es zum Zurückschwenken des jeweiligen Aufrichthebels 28 und Rückgängigmachung der Flurkantenanpassung kommt. Nachdem der jeweilige Aufrichthebel 28 zurückgeschwenkt ist in eine Stellung, die der Nichtgebrauchsstellung der Vorrichtung entspricht, wird vom weiterhin in Richtung zur Rückwandung 20 des Gehäuses 17 verfahrenen Schieber 27 der Schlitten 26 mitgenommen, ohne dabei seinen Abstand zum Schieber 27 nennenswert zu verändern.

Die Mitnahme des Schlittens 26 vom Schieber 27 erfolgt durch eine mechanische Verbindung derselben. Dazu ist an jedem Schlitten 26 ein um eine horizontale, parallel zur Achse 29 verlaufende Achse 31 schwenkbarer Kipphebel 32 gelagert. Der Kipphebel 32 ist in einer für ihn vorgesehenen Ausnehmung 33 im Schlitten 26 frei schwenkbar gelagert. Beim Kipphebel 32 handelt es sich um einen doppelarmigen Hebel, dessen Arme abgewinkelt sind, und zwar im gezeigten Ausführungsbeispiel um etwa 90° bis 145°. Am Ende eines oberen Hebelarms des Kipphebels 32 befindet sich die Achse 31, womit der Kipphebel 32 am Schlitten 26 in der gleichen vertikalen Ebene des Aufrichthebels 28 verschwenkbar ist. Ein freies Ende des unteren, seitlich abstehenden Hebelarms des Kipphebels 32 ist mit einem parallel zur Achse 31 verlaufenden Gelenkbolzen 36 gelenkig mit je einem Ende zweier paralleler laschenartiger Betätigungsarme 37 verbunden.

Die dem Kipphebel 32 gegenüberliegenden Enden der Betätigungsarme 37 sind mit einem weiteren Gelenkbolzen 38, der parallel zum Gelenkbolzen 36 verläuft, gelenkig mit dem Schieber 27 verbunden.

Jeder Kipphebel 32 ist mit einem Aufrichthebel 28 im gezeigten Ausführungsbeispiel mittels eines Paares gleicher Koppelarme 39 verbunden. Die Koppelarme 39 sind gegenüberliegenden Seiten des Aufrichthebels 28 und des Kipphebels 32 zugeordnet. Zum Aufrichthebel 28 weisenden Enden der Koppelarme 39 sind durch einen parallel zum Gelenkbolzen 36 verlaufenden Gelenkbolzen 40 mit dem Aufrichthebel 28 verbunden. Gegenüberliegende Enden der Koppelarme 39 sind mit einem parallel zum Gelenkbolzen 40 verlaufenden Gelenkbolzen 41 verbunden, der quer durch eine Stelle des Kipphebels 32 verläuft, in der sich seine beiden Hebelarme entweder mittig oder leicht außermittig treffen. Der Kipphebel 32 ist genauso breit ausgebildet wie der Aufrichthebel 28. Es liegen auch beide in einer gemeinsamen vertikalen Ebene parallel zur Längsmittelachse der Vorrichtung bzw. Rampe 16. Dadurch können die Koppelarme 39 und auch die Betätigungsarme 37 parallel verlaufend gegenüberliegenden Seiten jedes Kipphebels 32 zugeordnet sein.

Von den zuvor beschriebenen Kopplungen des Aufrichthebels 28, des Schlittens 26 und des Schiebers 27 mittels der Koppelarme 39, der Betätigungsarme 37 und der Kipphebel 32 ist kurz vor oder nach dem vollständigen Ausfahren der Rampe 16 aus dem Gehäuse 17 durch Hochschwenken der Aufrichthebel 28 von den Hebeltrieben 25 die Flurkantenanpassung durch Anheben der fahrzeugseitigen Querkante 24 der Rampe 26 auf das Niveau der Flurfläche 14 im Türbereich des Fahrzeugs herbeiführbar. Wenn nach dem Ausfahren der Rampe 16 aus dem Gehäuse 17 oder kurz davor der Schieber 27 relativ am Schlitten 26 vorgefahren und dabei der Abstand des Schlittens 26 zum Schieber 37 verkürzt wird, werden von den Betätigungsarmen 37 jedes Hebeltriebs 25 die drehbar am jeweiligen Schlitten 26 gelagerten Kipphebel 32 im Uhrzeigersinn um ihre Achse 31 verschwenkt. Dabei werden die Koppelarme 39 relativ zum Schlitten 26 nach vorn bewegt und dadurch von den Koppelarmen 39 die Aufrichthebel 28 im Uhrzeigersinn um die Achse 29 am Schlitten 26 verschwenkt bzw. verdreht, so dass die Achsen 30, womit die Aufrichthebel 28 gelenkig an der fahrzeugseitigen Querkante 24 der Rampe 16 gelagert sind, zur Herbeiführung der Flurkantenanpassung angehoben werden. Umgekehrt erfolgt die Rückgängigmachung der Flurkantenanpassung zu Beginn des Einfahrens der Rampe 16 in das Gehäuse 17.

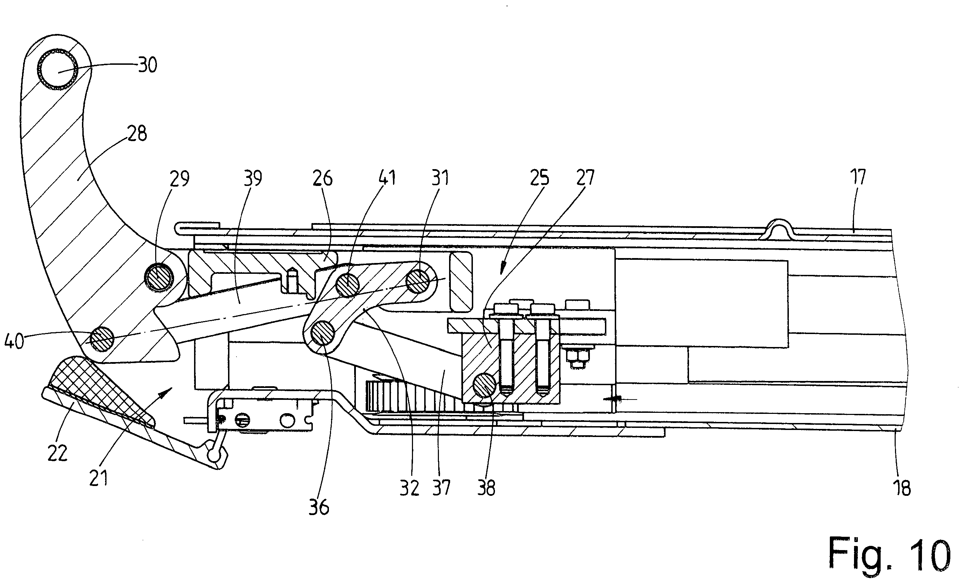

Die Achse 31 und der dazu parallele Gelenkbolzen 41 jedes Kipphebels 32 sind derart positioniert und der jeweilige Kipphebel 32 entsprechend ausgebildet sowie bemessen, dass in der Gebrauchsstellung der Rampe 16 bei hochgeschwenkten Aufrichthebeln 28 der jeweilige mittige Gelenkbolzen 41 jedes Kipphebels 32 oberhalb einer gedachten Linie durch die Achsen 31, worum der Kipphebel 32 am Schlitten 26 verschwenkbar ist und der Gelenkbolzen 40 des Aufrichthebels 28 liegt (Fig. 10). Dadurch kommt eine sogenannte Übertotpunktstellung des Kipphebels 32 jedes Hebeltriebs 25 zustande, die nach erfolgter Flurkantenanpassung die hochgeschwenkten Kipphebel 32 mit der fahrzeugseitigen Querkante 24 der Rampe 16 formschlüssig arretiert, wodurch eine ungewollte Rückgängigmachung der Flurkantenanpassung der Rampe 16 nicht möglich ist.

Die Steuerung der Relativbewegung zwischen dem Schlitten 26 und dem Schieber 27 jedes Hebeltriebs 25 erfolgt im gezeigten Ausführungsbeispiel durch zwei gleich ausgebildete, parallele Klinken 42 jedes Hebeltriebs 25. Die Klinken 42 sind so ausgebildet, dass sie beim Herausfahren der Rampe 16 aus dem Gehäuse 17 den Abstand des Schiebers 27 zum Schlitten 26 konstant halten, so dass insoweit der Schieber 27 und der Schlitten 26 gleichermaßen synchron verfahrbar sind ohne dass eine Relativbewegung zwischen beiden stattfindet. Dabei wird die Rampe 16 größtenteils aus dem Gehäuse 17 herausgeschoben. Anschließend werden die Klinken 42 derart betätigt, dass sie nicht mehr den Abstand des Schlittens 26 zum Schieber 27 konstant halten. Die Klinken 42 geben dazu die Kopplung des Schiebers 27 mit dem Schlitten 26 frei, so dass erst dann eine Relativbewegung zwischen beiden stattfinden kann, wenn sich der Schieber 27 dem Schlitten 26 nähert.

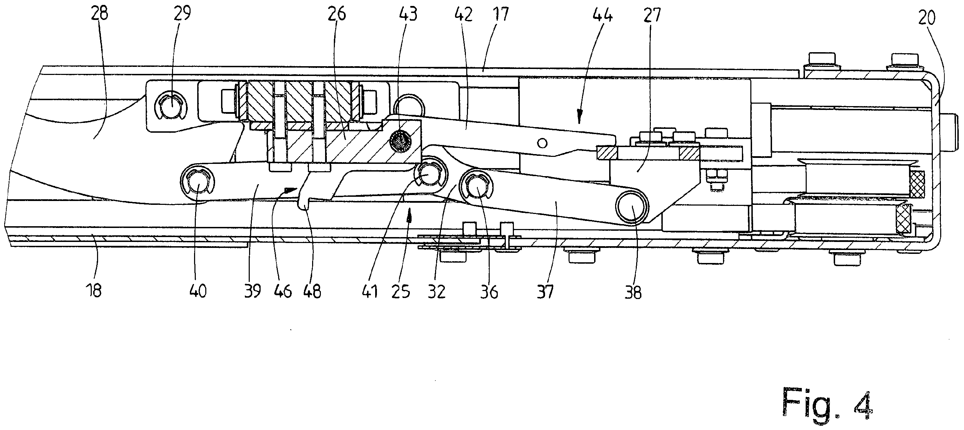

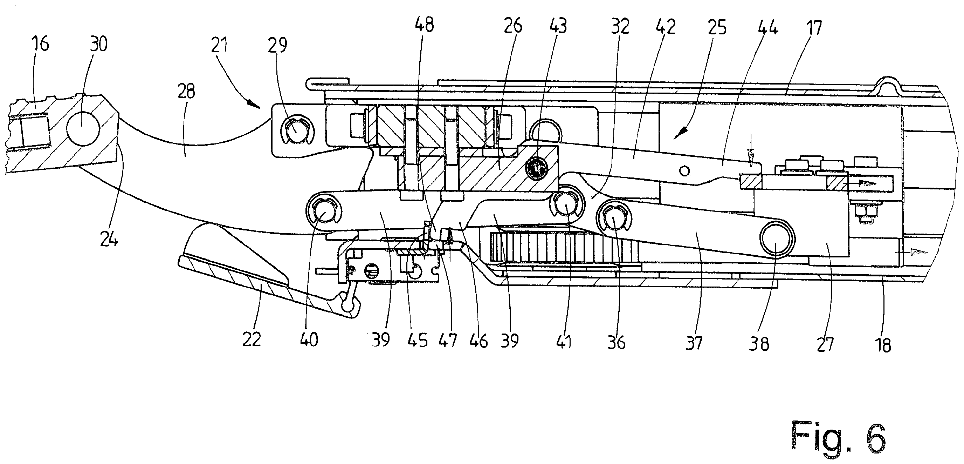

Die Klinken 42 sind als doppelarmige Hebel ausgebildet. Dort, wo die beiden Hebelarme der Klinken 42 sich treffen, ist jede Klinke 42 mit einer parallel zu den übrigen Achsen, beispielsweise der Achse 30, verlaufenden Achse 43 am Schlitten 26 in einer vertikalen Längsmittelebene verschwenkbar gelagert. Ein zum Schieber 27 weisender Endbereich 44 jeder Klinke 42 kann sich in der in den Fig. 4 und 6 gezeigten Schwenkposition der jeweiligen Klinke 42 am Schieber 27 abstützen, so dass keine Relativbewegung zwischen dem Schlitten 26 und dem Schieber 27 möglich ist. Nach oder kurz vor dem Ausfahren der Rampe 16 aus dem Gehäuse 17 werden die Klinken 42 gegen den Uhrzeigersinn um die Achsen 43 etwas verschwenkt, so dass der dem Schieber 27 zugeordnete Endbereich 44 jeder Klinke 42 vom Schieber 27 freikommt. Dadurch wird eine Relativbewegung zwischen dem Schlitten 26 und dem Schieber 27 möglich. Insbesondere ist dann der Abstand zwischen beiden veränderbar.

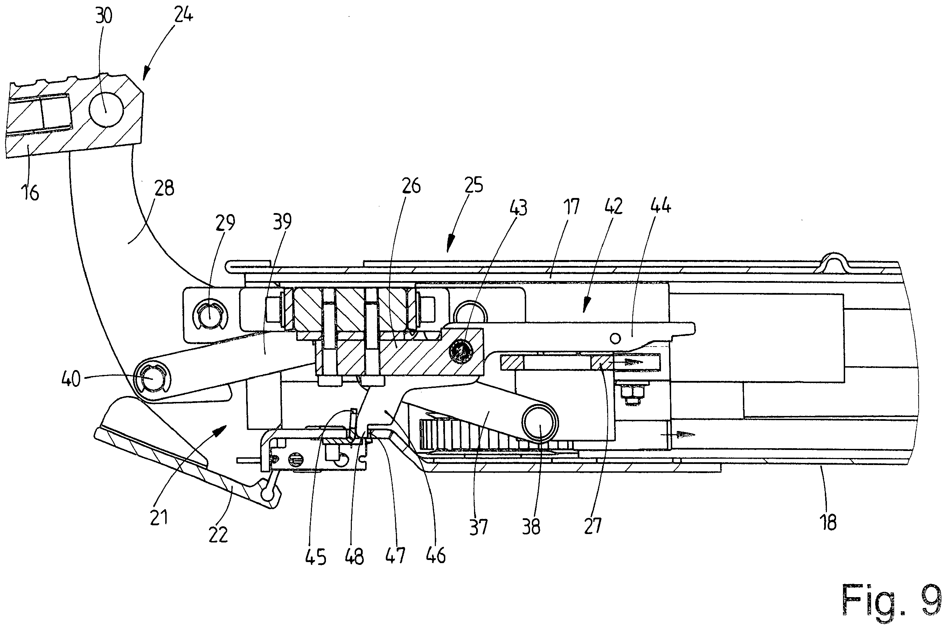

Ein zweiter, zum jeweiligen Aufrichthebel 28 weisender Hebelarm jeder Klinke 42 ist mit einem festen Anschlag 45 des Gehäuses 17 nach dem Ausschieben der Rampe 16 aus dem Gehäuse 17 zur Anlage bringbar. Das führt zu einem Verschwenken der Klinken 42 gegen den Uhrzeigersinn, wodurch die Abstützung des freien Endbereichs 44 des gegenüberliegenden Hebelarms jeder Klinke 42 am Schieber 27 aufgehoben wird und im Anschluss an das Herausfahren der Rampe 16 aus dem Gehäuse 17 das Hochschwenken der Aufrichthebel 28 zur Herbeiführung der Flurkantenanpassung eingeleitet wird. Wenn die Rampe 16 vollständig aus dem Gehäuse 17 herausgefahren und die Flurkantenanpassung erfolgt ist, sich also die Vorrichtung in ihrer Gebrauchsstellung befindet, kann gegebenenfalls der freie Endbereich 44 der jeweiligen Klinke 42 wieder zur Anlage an den Schiebern 27 gelangen, wodurch die Klinken 42 gegen unbeabsichtigtes Zurückschwenken arretiert werden. Dabei greifen Nasen 48 an zu den Aufrichthebeln 28 weisenden Endbereichen 46 der Klinken 42 in Ausnehmungen 47 in den Anschlägen 45 des Gehäuses 17, beispielsweise der Bodenwandung 18 desselben, ein (Fig. 9). Dies führt zu einer Arretierung der Aufrichthebel 28 und der dadurch herbeigeführten Flurkantenanpassung der Rampe 16.

Beim Einfahren der Rampe 16 in das Gehäuse 17 wird als Erstes die Flurkantenanapassung durch Herunterschwenken der Aufrichthebel 28 rückgängig gemacht. Dabei werden zunächst die Schlitten 26 von den Klinken 42 in ihrer Endposition zur Flurkantenanpassung festgehalten durch Eingriff der Nasen 48 an den Endbereichen 46 der Klinken 42 in den Ausnehmungen 47 im Gehäuse 17. Hierbei werden anfänglich nur die Schieber 27 von den Schlitten 26 wegbewegt und dadurch die Aufrichthebel 28 heruntergeschwenkt.

Nach der Rückgängigmachung der Flurkantenanpassung werden die Schlitten 26 von den Schiebern 27 mitgenommen und dabei die Klinken 42 durch Zurückschwenken im Uhrzeigersinn mit ihren Nasen 48 aus den Ausnehmungen 47 im Gehäuse 17 herausgezogen. Gleichzeitig wird die Rampe 17 von den mittels des Schiebers 27 gezogenen Schlitten 26 in das Gehäuse 17 bis zum Erreichen der Nichtgebrauchsstellung eingefahren und kurz vor Erreichen der Nichtgebrauchsstellung die Klinken 42 weiter im Uhrzeigersinn verschwenkt, so dass die Klinken 42 wieder eine Abstützung der Schlitten 26 an den Schiebern herbeiführen (Fig. 4).

## Patentansprüche

1. Vorrichtung zum Erleichtern des Ein- und Ausstiegs von insbesondere Rollstuhlfahrern in ein bzw. aus einem Fahrzeug, mit einer in einem Gehäuse (17) unter einer Flurfläche (14) des Fahrzeugs in einer Nichtgebrauchsstellung unterbringbaren Rampe (16), die bei Gebrauch aus dem Gehäuse (17) herausfahrbar ist, wobei eine zum Fahrzeug weisende fahrzeugseitige Querkante (24) der Rampe (16) zur Überführung in eine Gebrauchsstellung durch mindestens einen einen im Gehäuse (17) verfahrbaren Schlitten (26), einen Schieber (27) und einen Aufrichthebel (28) aufweisenden Hebeltrieb (25) auf das Niveau der Flurfläche (14) anhebbar ist, indem der dem Schlitten (26) zugeordnete Schieber (27) zum Verschwenken des jeweiligen Aufrichthebels (28) relativ zum Schlitten (26) bewegbar ist, **dadurch gekennzeichnet, dass** der Aufrichthebel (28) des oder jedes Hebeltriebs (25) schwenkbar am im Gehäuse (17) verfahrbaren Schlitten (26) gelagert ist, jedem Schlitten (26) ein doppelarmiger Kipphebel (32) zugeordnet ist, der kipp- bzw. drehbar am jeweiligen Schlitten (26) gelagert ist, und der jeweilige Kipphebel (32) an einem Gelenkbolzen (41) zwischen seinen beiden Hebelarmen über mindestens einen Koppelarm (39) mit dem jeweiligen Aufrichthebel (28) verbunden ist.

2. Vorrichtung nach Anspruch 1, **dadurch gekennzeichnet, dass** die Relativbewegung des Schiebers (27) zum Schlitten (26) erst erfolgt, insbesondere erst freigebbar ist, sobald der Schlitten (26) seine Endposition, die er in der Gebrauchsstellung der Rampe (16) beibehält, erreicht hat.

3. Vorrichtung nach Anspruch 1 oder 2, **dadurch gekennzeichnet, dass** ein Antrieb zum Ausfahren der Rampe (16) aus dem Gehäuse (17) und zum Einfahren der Rampe (16) in das Gehäuse (17) auf den oder die Schieber (27) einwirkt und/oder mit demselben verbunden ist.

4. Vorrichtung nach Anspruch 1, **dadurch gekennzeichnet, dass** der jedem Schlitten (26) zugeordnete doppelarmige Kipphebel (32) mit einem Ende eines ersten Hebelarms kipp- bzw. drehbar am jeweiligen Schlitten (26) gelagert ist.

5. Vorrichtung nach Anspruch 4, **dadurch gekennzeichnet, dass** ein Ende eines zweiten Hebelarms des jeweiligen Kipphebels (32) mit dem ihm zugeordneten Schieber (27) verbunden ist, vorzugsweise mittels mindestens eines Betätigungsarms (37) zwischen dem Ende des zweiten Hebelarms des jeweiligen Kipphebels (32) und dem dazugehörenden Schieber (27).

6. Vorrichtung nach Anspruch 5, **dadurch gekennzeichnet, dass** eine Achse (31) und ein dazu paralleler Gelenkbolzen (41) jedes Kipphebels (32) derart positioniert sind und der jeweilige Kipphebel (32) entsprechend ausgebildet sowie bemessen ist, dass in der Gebrauchsstellung der Rampe (16) bei hochgeschwenkten Aufrichthebeln (28) der jeweilige mittige Gelenkbolzen (41) jedes Kipphebels (32) oberhalb einer gedachten Linie durch die Achse (31), worum der Kipphebel (32) am Schlitten (26) verschwenkbar ist, und einem Gelenkbolzen (40) des Aufrichthebels (28) liegt.

## Claims

1. Device for facilitating entry and exit to and from a vehicle, especially for wheelchair users, with a ramp (16) which can be accommodated in a non-use position in a housing (17) under a floor surface (14) of the vehicle and which can be extended out of the housing (17) for use, wherein, for transfer into a use position, a vehicle-facing, vehicle-side transverse edge (24) of the ramp (16) can be raised to the level of the floor surface (14) by at least one lever mechanism (25) having a carriage (26), which can be displaced in the housing (17), a slide (27) and an erecting lever (28) by virtue of the slide (27) assigned to the carriage (26) being movable relative to the carriage (26) for the purpose of pivoting the respective erecting lever (28), **characterized in that** the erecting lever (28) of the or each lever mechanism (25) is mounted pivotably on the carriage (26), which can be displaced in the housing (17), there is assigned to each carriage (26) a double-armed tilting lever (32) which is mounted such that it can tilt or rotate on the respective carriage (26), and the respective tilting lever (32) is connected via at least one coupling arm (39) to the respective erecting lever (28) at a pivot pin (41) between its two lever arms.

2. Device according to Claim 1, **characterized in that** the relative movement of the slide (27) in relation to the carriage (26) only takes place, in particular can only be released, once the carriage (26) has reached its end position, which it maintains in the use position of the ramp (16).

3. Device according to Claim 1 or 2, **characterized in that** a drive for extending the ramp (16) out of the housing (17) and for retracting the ramp (16) into the housing (17) acts on the slide or slides (27) and/or is connected to same.

4. Device according to Claim 1, **characterized in that** the double-armed tilting lever (32) assigned to each carriage (26) is mounted such that it can tilt or pivot on the respective carriage (26) by way of an end of a first lever arm.

5. Device according to Claim 4, **characterized in that** an end of a second lever arm of the respective tilting lever (32) is connected to the slide (27) assigned thereto, preferably by means of at least one actuating arm (37) between the end of the second lever arm of the respective tilting lever (32) and the associated slide (27) .

6. Device according to Claim 5, **characterized in that** an axle (31) and a pivot pin (41), parallel thereto, of each tilting lever (32) are positioned and the respective tilting lever (32) is correspondingly formed and dimensioned in such a way that, in the use position of the ramp (16), when the erecting levers (28) are pivoted up, the respective middle pivot pin (41) of each tilting lever (32) lies above an imaginary line through the axle (31), about which the tilting lever (32) can be pivoted on the carriage (26), and a pivot pin (40) of the erecting lever (28).

## Revendications

1. Dispositif destiné à faciliter la montée, notamment d'utilisateurs de fauteuils roulants, dans un véhicule ou leur descente de celui-ci, le dispositif comprenant une rampe (16) pouvant être montée dans un boîtier (17) sous une surface de plancher (14) du véhicule dans une position de non-utilisation et pouvant être sortie du boîtier (17) en utilisation, un bord transversal côté véhicule (24) de la rampe (16), lequel est dirigé vers le véhicule, pouvant être relevé au niveau de la surface de plancher (14) en vue du transfert dans une position d'utilisation par le biais d'au moins une commande à (25) comprenant un chariot (26) mobile dans le boîtier (17), un coulisseau (27) et un levier de levage (28) du fait que le coulisseau (27) associé au chariot (26) peut être déplacé pour faire pivoter le levier de levage respectif (28) par rapport au chariot (26), **caractérisé en ce que** le levier de levage (28) de la ou de chaque commande à levier (25) est monté de manière pivotante sur le chariot (26) qui peut être déplacé dans le boîtier (17), un levier à bascule à deux bras (32) est associé à chaque chariot (26) et est monté de manière pivotante ou rotative sur le chariot respectif (26) et le levier à bascule respectif (32) est relié au levier de levage respectif (28) sur un axe d'articulation (41) entre ses deux bras de levier par le biais d'au moins un bras d'accouplement (39).

2. Dispositif selon la revendication 1, **caractérisé en ce que** le déplacement relatif du coulisseau (27) par rapport au chariot (26) n'est effectué, en particulier ne peut être libéré, que dès que le chariot (26) a atteint sa position finale qu'il conserve dans la position d'utilisation de la rampe (16).

3. Dispositif selon la revendication 1 ou 2, **caractérisé en ce qu'**un entraînement agit sur le ou les coulisseaux (27) et/ou est relié à ceux-ci pour sortir la rampe (16) du boîtier (17) et rentrer la rampe (16) dans le boîtier (17).

4. Dispositif selon la revendication 1, **caractérisé en ce que** le levier à bascule à double bras (32), associé à chaque bras (26), est monté de manière pivotante ou rotative sur le chariot respectif (26) au niveau d'une extrémité d'un premier bras de levier.

5. Dispositif selon la revendication 4, **caractérisé en ce qu'**une extrémité d'un deuxième bras de levier du levier à bascule respectif (32) est reliée au coulisseau associé (27), de préférence au moyen d'au moins un bras d'actionnement (37) entre l'extrémité du deuxième bras de levier du levier à bascule respectif (32) et le coulisseau associé (27).

6. Dispositif selon la revendication 5, **caractérisé en ce qu'**un axe (31) et un axe d'articulation (41), parallèle à celui-ci, de chaque levier à bascule (32) sont positionnés, et le levier à bascule respectif (32) est conçu et dimensionné en conséquence, de telle manière que, dans la position d'utilisation de la rampe (16), lorsque les leviers de levage (28) sont pivotés vers le haut, l'axe d'articulation central (41) respectif de chaque levier à bascule (32) est situé au-dessus d'une ligne imaginaire passant par l'axe (31), autour duquel le levier à bascule (32) sur le chariot (26) peut pivoter, et un axe d'articulation (40) du levier de levage (28).
